# EUROPEAN PATENT APPLICATION

(11) **EP 3 098 373 A1**
(43) Date of publication of application: **30.11.2016**
(21) Application number: 15169271.2
(22) Date of filing: 26.05.2015
(51) Int. Cl.: E05C 1/06, E05B 17/00

(54) **LOCKING-DEVICE FOR A SWITCHGEAR AND A CABINET OF A SWITCHGEAR COMPRISING SUCH LOCKING-DEVICE**

(71) Applicant: ABB S.p.A., 20124 Milano (IT)
(72) Inventor: Frattaruolo, Massimo, 20837 Veduggio con Colzano (MB) (IT); Proserpio, Simone Angelo, 22039 Valbrona (CO) (IT)
(74) Representative: De Santis, Giovanni

(57) **Abstract**

A locking-device (1) for a switchgear (2), comprising:
- a hook-plate-element (3) suitable for being fixed to a frame (4) of said switchgear (2);
- a housing-unit (5) suitable for being mounted on a door (6) of the switchgear (2),
- a locking-slide-element (7) arranged within the housing-unit (5) and configured for engaging with the hook-plate-element (3) to lock the door (6) on the frame (4); and a
- a driving-unit (8) pivotally arranged within the housing-unit (5) and adapted for moving the locking-slide-element (7) from a locking position (9), in which the locking-slide-element (7) engages with the hook-plate-element (3) for locking the door (6), to an unlocking position (10), in which the locking-slide-element (7) disengages from the hook-plate-element (3) for allowing opening of the door (6).

The locking-slide-element (7) comprises a latching-end (11) linearly movable within the housing-unit (5) from the locking position (9) to the unlocking position (10), and in that an admittance-opening (12) is obtained on the housing-unit (5) for enabling a clinging-protrusion (13) of the hook-plate-element (3) to enter into the housing-unit (5) so as to engage with the latching-end (11) in the locking-position (9) inside the housing-unit (5).

## Description

The present invention relates to a compact locking-device for locking a door of a switchgear, especially a low voltage switchgear.

For the purposes of the present application, the term low voltage refers to applications up to 1 kV, but the locking device according to the present invention can be used in switchgears for applications having greater voltage values. Further, for the purposes of the present application, the term switchgear is equivalent to the terms panel or switchboard.

Switchgears are known comprising a frame and one or more hinged doors that together define a cabinet or enclosure within which internal rooms are defined for containing electric/electronic components.

Switchgears having a high degree of protection or protection rating (generally indicated as IP Code or IP Rating according to an International protection standard) against foreign bodies, dust and water, must be unavoidably provided with rather bulky and heavy closing/locking mechanisms.

More precisely, the doors of these switchgears are provided with a locking mechanism which can be actuated for engaging with more locking elements fixed to the upright of the frame in order to lock the door in a closed position.

The known locking mechanism are mounted on the internal side of the door and the stationary locking elements are fixed on a front surface of the frame-upright. In practice, the operatively interaction between the movable part, i.e. the locking mechanism, and the stationary locking element occurs in the space provided between the upright and the inner surface of the door.

The door is provided with perimetrical portions having a large thickness in order to house the locking mechanisms which extend longitudinally for a relevant part of the door and whose traverse dimensions are not so small as well.

The perimetrical portions of the door comprise hollow section-bars having an internal space for containing the locking mechanism. Evidently, a bulky and heavy structural configuration of the locking mechanisms, therefore of the doors, implies a waste of space and an increase in the production costs.

In order to provide an adequate space for the interaction of the locking mechanism with the corresponding locking elements, the frame-upright is so shaped as to provide a recessed zone - facing the inner surface of the door - intended to house the stationary locking elements. Evidently, a frame-upright configured with a front recessed zone implies a reduction of the cross-section extent, and thus a lower mechanical sturdiness and strength. Furthermore, the need for providing a gasket acting between the door and the frame for obtaining the required IP ratings, makes necessary to fix on the internal surface of the door an additional panel on which such a gasket must be applied. In this way, the additional panel compensate for the large gap between the external layer of the door and the abutment zone of the frame for the gasket. Consequently, such a configuration of the door and of the locking arrangement is structurally rather complex and expensive as well.

Although the known technical solutions perform in a rather satisfying way, there is still room for further improvements. In particular it would be desirable to noticeably simplify the closing and locking systems for the switchgears that must comply with high levels of Internal Protection standards, by providing a very simple, versatile and cheap technical solution.

This is achieved by a locking-device as defined in the appended claims and described hereinafter in details. According to the invention, there is provided a locking-device for a switchgear, comprising:
- a hook-plate-element suitable for being fixed to a frame of said switchgear;
- a housing-unit suitable for being mounted on a door of said switchgear,
- a locking-slide-element arranged within said housing-unit and configured for engaging with said hook-plate-element to lock said door on said frame;
- a driving-unit pivotally arranged within said housing-unit and adapted for moving said locking-slide-element from a locking position, in which said locking-slide-element engages with said hook-plate-element for locking said door, to an unlocking position, in which said locking-slide-element disengages from said hook-plate-element for allowing opening of said door.

The locking-slide-element comprises a latching-end linearly movable within said housing-unit from said locking position to said unlocking position. An admittance-opening is obtained on said housing-unit for enabling a clinging-protrusion of said hook-plate-element to enter into said housing-unit so as to engage with said latching-end in said locking-position inside said housing-unit.

The present invention also encompasses a cabinet for a switchgear comprising at least one locking-device as defined in the annexed claims and disclosed in the following description. In particular, the hook-plate-element of the locking-device is fixed to the frame of the cabinet, and the housing-unit of the locking-device is mounted on a door of the cabinet.

Further, the present invention encompasses a switchgear comprising a cabined as defined by the annexed clams and disclosed in the following description.

Characteristics and advantages of the present disclosure will result from the description and from claims.

The present disclosure can be better understood and implemented with reference to the attached drawings that illustrate an embodiment thereof by way of non-limiting example, in which:
Figure 1 is an exploded view of a door with a locking-device according to the invention;
Figure 2 shows a configuration of a switchgear having a plurality of doors each provided with two locking-devices according to the invention;

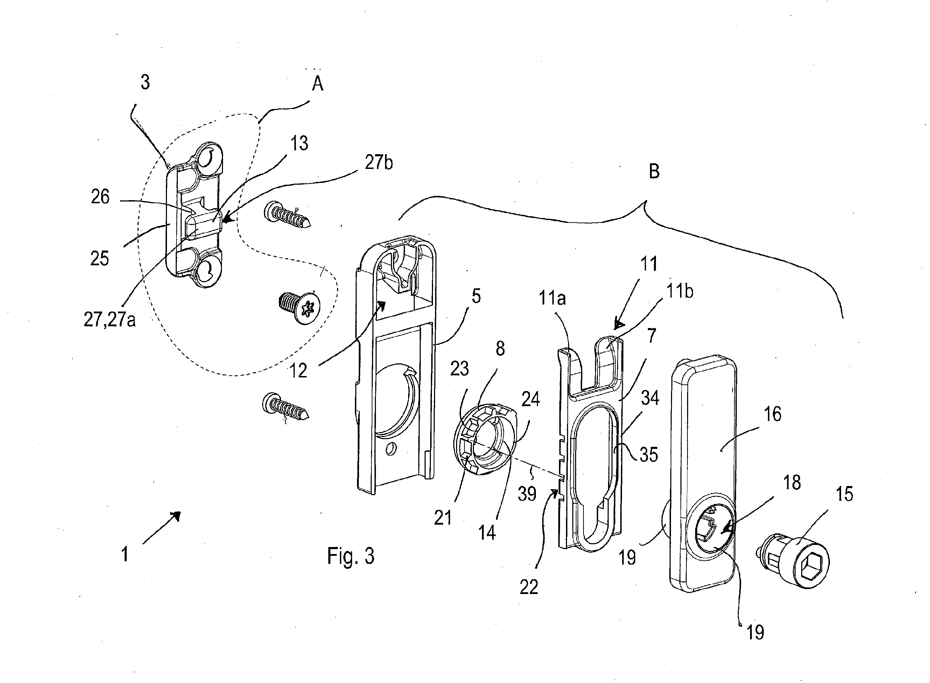

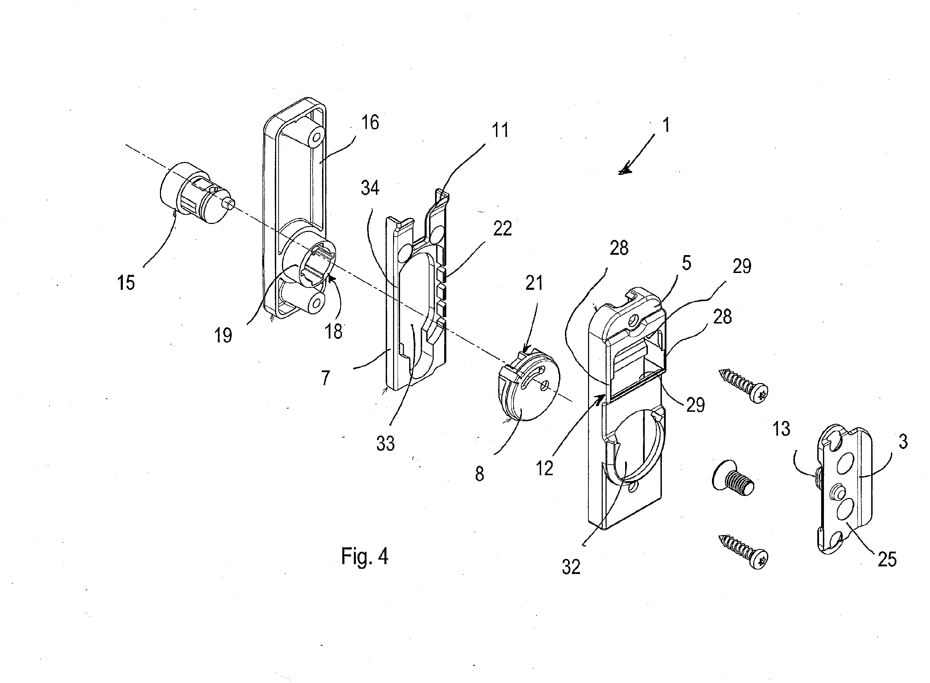

Figures 3 and 4 are different enlarged exploded views of the locking-device comprising a stationary unit intended to be fixed to a switchgear-frame and a movable unit intended to be mounted on a switchgear-door;

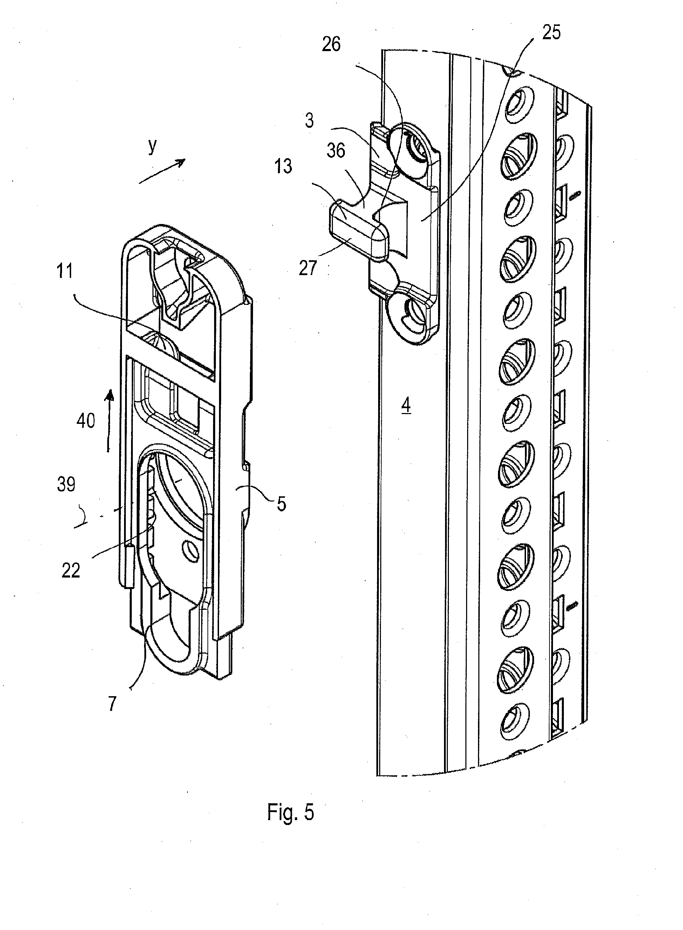

Figure 5 shows a rear movable part of the locking-device spaced from an upright of the switchgear-frame, and the stationary unit, i.e. a hook-plate element of the locking-device which is fixed to such an upright;

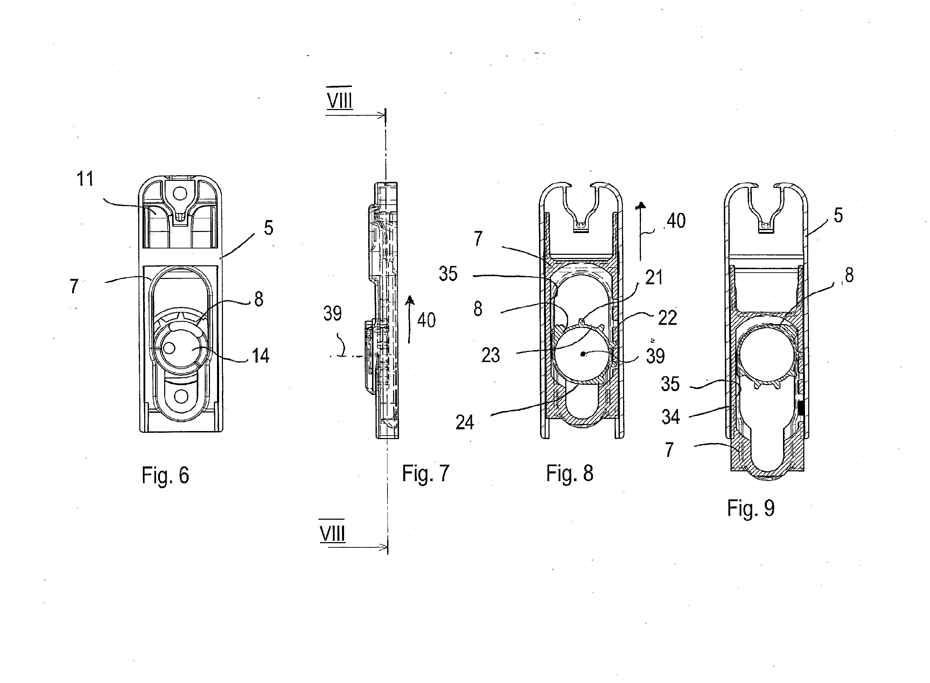

Figures 6 and 7 are different views of the rear movable part of the locking-device;
Figure 8 is a section-view taken along the plane VIII-VIII in Figure 7, in which the locking device is in a locking-position;
Figure 9 is a view like Figure 8 but showing the locking device in a unlocking position;
Figure 10 is a front view showing the external side of a door of a switchgear;
Figure 11 is a lateral view of the door in figure 10;
Figure 12 is a rear view showing the internal side of the door in figure 10;
Figure 13 is an enlarged detail of Figure 10, showing the front movable part of the locking-device;
Figure 14 is enlarged detail of Figure 12, showing the rear movable part of the locking-device;
Figure 15 is a front view showing the rear movable part of the locking-device in a spaced apart position from the stationary hook-plate element fixed to the upright;
Figure 16 is a section-view taken along the plane XVI-XVI in Figure 15, in which the rear movable part of the locking device is shown in a spaced apart position from the stationary hook-plate element;

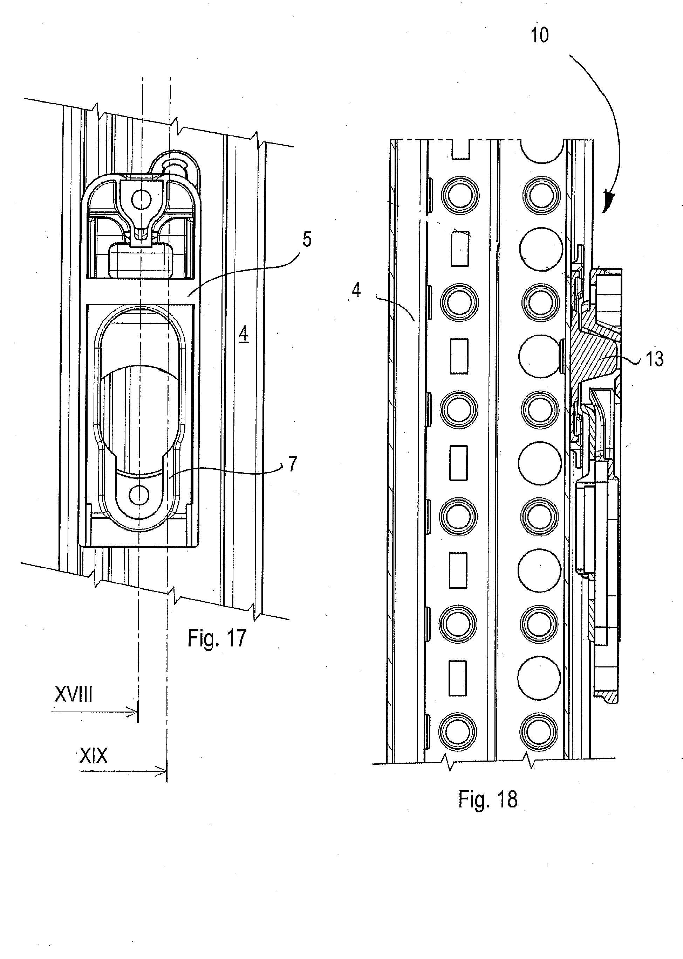

Figure 17 is a front view showing the rear movable part of the locking device close to the stationary hook plate element in a unlocking-position;
Figures 18 and 19 are section view taken along the planes XVIII-XVIII and XIX-XIX in Figure 17 respectively;
Figure 20 is a view like Figure 19 but with the locking device in a locking position.

It should be noted that in the detailed description that follows, in order to clearly and concisely disclose the present invention, the drawings may not necessarily be to scale and certain features of the disclosure may be shown in somewhat schematic form.

With reference to the attached Figures, there is described a locking-device 1 for locking a door 6 hingedly connected to a frame 4 of a cabinet for a switchgear 2, especially a low voltage switchgear 2. The locking-device 1 includes a stationary unit A, namely a hook-plate element 3 intended to be fixed to the frame 4, and a movable unit B, intended to be mounted on the door 6.

The frame 4 and the hinged doors 6 define a cabinet or enclosure within which internal rooms are defined for containing electric/electronic components.

In particular, each door 6 is hinged to a vertical upright of the frame 4 and acts for enabling/preventing access to the respective internal room. The doors 6 referenced to in this description have a simplified structural configuration, since they are preferably of the type made of a single layer of metal or glass material, or other suitable materials, with no hollow perimetrical frame. These doors 6 are provided, on the internal side 30 thereof, with a peripheral gasket 30 intended to be pressed against an abutment-zone of the frame 4 for achieving a waterproof and fireproof protection of the internal room. The gasket 30 prevents ingress of foreign objects or water towards hazardous parts within the switchgear 2. For example, a degree of protection IP65 (International protection code according to the standard IEC 60529) is ensured.

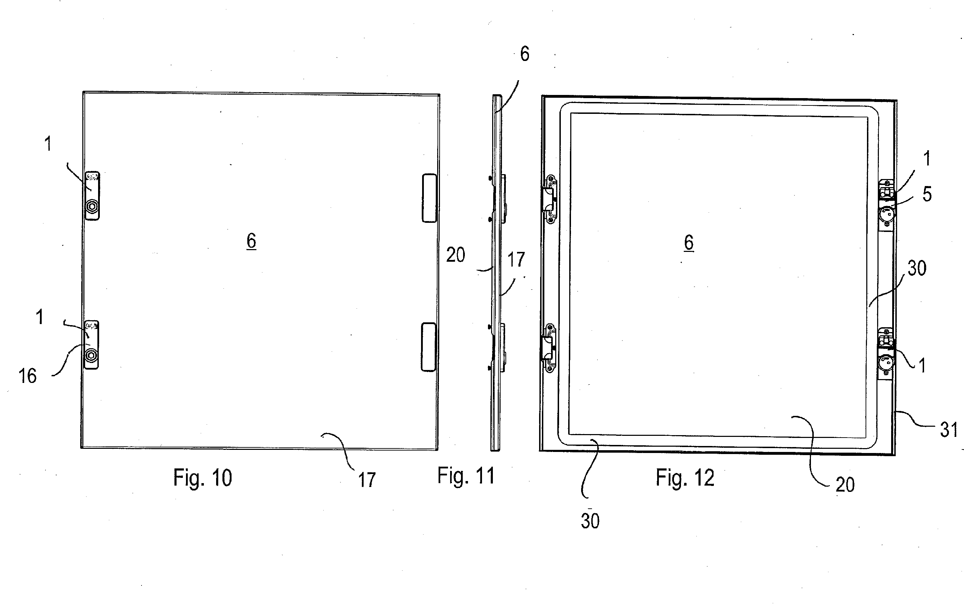

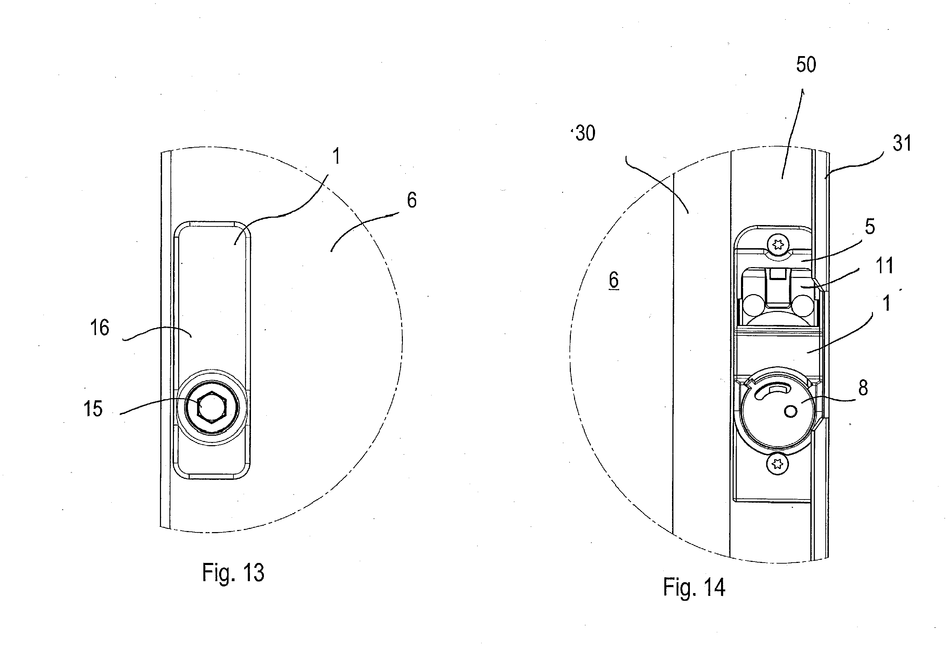

As it will result from the description below, a desired number of locking-devices 1, namely the movable units B thereof, may be mounted even on doors 6 of very reduced height, owing to the compact dimensions of the locking device, while at the same time complying with the desired internal protection IP65. In fact, the particular structural configuration and reduced height and width dimensions of the locking-device 1 enable its movable unit B to be applied on a very small zone of the door 6, namely between the peripheral gasket 30 and a perimetrical edge 31 of the door 6, as it is described in the following and shown in Figures 12 and 14.

The hook-plate element 3 comprises a base-portion 25, suitable for being applied and fixed to an upright of the switchgear-frame 4, and a clinging-protrusion 13 which is adapted for coupling with the movable-unit B of the locking-device 1 in the locking-position 9. More precisely, the clinging-protrusion 13 includes a stem 26, protruding from the base-portion 25, and a traverse-portion 27 projecting transversely from the stem 26 at an offset-distance 51 from, and parallel to, the base-portion 25. Further details and technical features of the clinging-protrusion 13 will be described later on.

The movable unit B comprises a rear part, namely a housing-unit 5 to be applied to the internal side 20 of the door 6, and a front part, namely a fixing-cover unit 16 to be applied to the external side 17 of the door 6 and adapted to be connected to the housing-unit 5.

The fixing-cover-unit 16, intended to be applied to the external side 17 of the door 6, is provided with a receiving opening 18 delimited by an encircling-wall 19 for housing a desired cylinder-lock 15. Owing to the so configured fixing-cover-unit 16, a cylinder-lock 15 to be mounted in the locking device 1 may be chosen according to specific requirements or particular needs.

The locking device 1 comprises a locking-slide-element 7 arranged within the housing-unit 5 and configured for engaging with the hook-plate-element 3 in order to lock the door 6 in a locking position 9 relative to the frame 4.

There is provided a driving-unit 8 pivotally arranged within the housing-unit 5 and adapted for moving the locking-slide-element 7. A toothed-rack-portion 22 is provided along a side zone of the locking-slide element 7, which is arranged for meshing with a respective toothed portion of the driving-unit 8 (better described later on) so as to transform a rotation movement of the driving-unit 8 in a linear displacement of the locking-slide element 7.

The driving-unit 8 moves the locking-slide-element 7 from the locking position 9, in which the locking-slide-element 7 engages with the hook-plate-element 3 for locking the door 6, to an unlocking position 10, in which the locking-slide-element 7 disengages from the hook-plate-element 3 for allowing opening of the door 6.

The locking-slide-element 7 comprises a latching-end 11 linearly movable within the housing-unit 5 between the above mentioned locking position 9 and the unlocking position 10.

The latching-end 11 is adapted for getting interposed, in the locking-position 9, between the traverse-portion 27 and the base-portion 25 of the hook-plate element 3.

The clinging-protrusion 13 has a T-shaped cross-section, with the traverse-portion 27 projecting orthogonally in two opposite directions from the stem 26 so as to define two aligned jut-parts 27a, 27b. The latching-end 11 comprises two parallel and spaced prong-parts 11a, 11b each configured for engaging with one of such jut-parts 27a, 27b.

The prong-parts 11a, 11b of the locking-slide-element 7 have a ramp-shape, and are bent, when the door 6 is closed, toward the internal room of the switchgear 2.

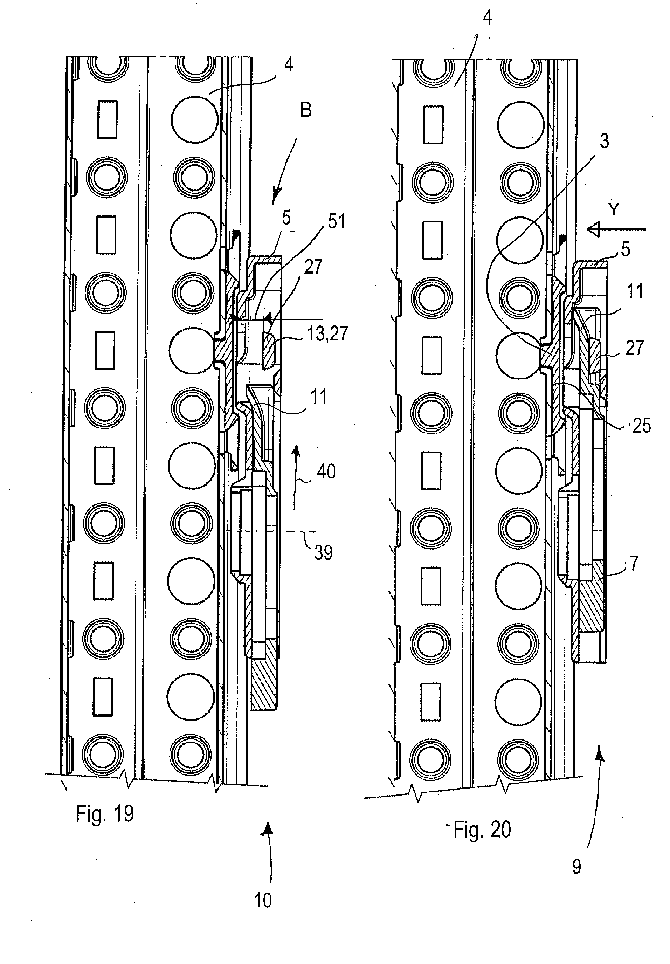

Owing to the ramp-shape or bent-shape the insertion of the prong-parts 11a, 11b into the space between the respective jut-parts 27a, 27b and the base-plate 25 is facilitated. The bent prong-parts 11a, 11b act, upon a sliding movement relative to the jut-parts 27a, 27b, for tightly shutting with force the door 6 against the frame 4. In other words, the relative sliding of the prong-parts 11a, 11b with respect to the jut-parts 27a, 27b along tilted planes with respect to a driving-direction 40 of the locking-slide element 7, generates a force component in a closing direction Y of the door 6, and makes the peripheral gasket 30 to be pressed against the abutment zone on the frame 4, thus effectively achieving the desired sealing action against external foreign bodies, dust and water. Figure 19 shows the housing-unit 5 close to the hook-plate element 3, with the clinging-protrusion 13 arranged within the housing unit 5 and with the locking-slide element 7 in a lower position, i.e. in the unlocking position 10. In Figure 20 the locking-slide element 7 in an upper position, i.e. in the locking position 9, with the latching-end 11 interposed between the traverse-portion 27 and the base-portion 25.

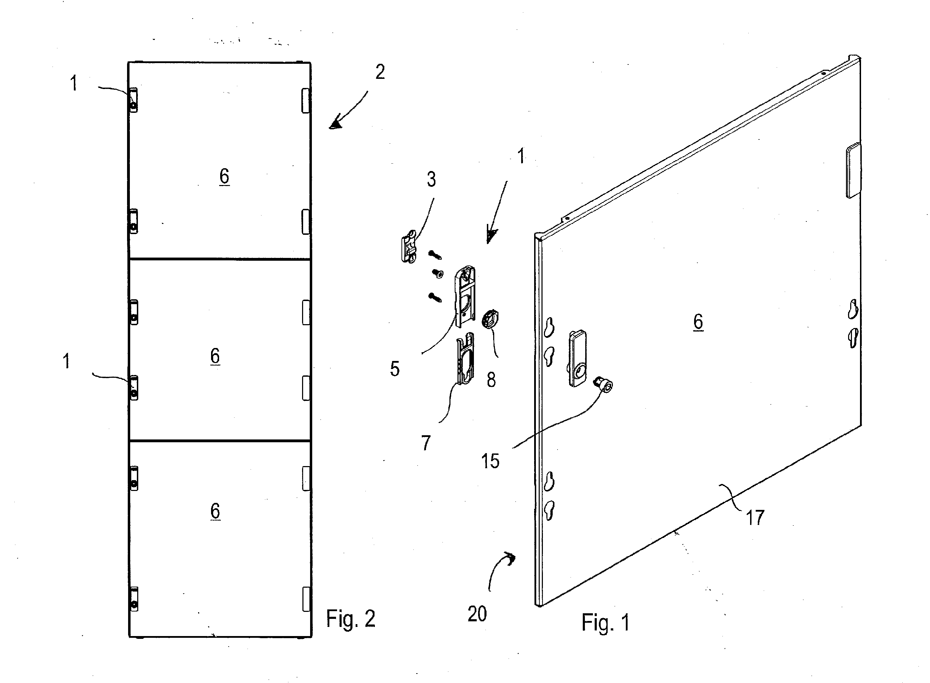

An admittance-opening 12 is obtained on the housing-unit 5 for enabling the clinging-protrusion 13 of the hook-plate-element 3 to enter into the housing-unit 5 in order to engage with the locking-end 11 in the locking-position 9 inside the housing-unit 5. Therefore, the interaction of the clinging protrusion 13 with the latching-end 11 takes place within the housing-unit 5. In other words, an interpenetration of the stationary unit A with the movable unit B is achieved. Owing to the advantageous compact structural configuration of the locking-device, a high reduction of the encumbrances required for the installation of the locking-device 1 is achieved, this enabling an optimized exploitation of the switchgear spaces. Furthermore, the compact dimensions and the interpenetration of the hook-plate element 3 into the housing-unit 5, makes possible to mount the hook-plate element 3 on the utmost external surface of the upright, with no need for fitting recessed zone on the upright as occurs in the prior art systems. Advantageously, the sturdiness of the uprights is not penalized. The compact configuration, in particular the reduced thickness, owing to the above mentioned interpenetration, of the locking device 1, enables to comply with high IP ratings also when a door 6 having a very simplified and thin structure, is used, e.g. a door 6 composed of a single layer of metal plate or sheet or other suitable material. In fact, also such a simplified type of door 6 may be provided with a peripheral gasket 30 without the need for any additional rear panel for the supporting the latter. Furthermore, since the engagement/disengagement of the latching-end 11 with/from the hook-plate element 3 takes place inside the housing-unit 5, a general reduction of the longitudinal dimensions of the locking-device 1 is also advantageously provided. This enables to mount even two or more locking-devices 1 also on doors having very contained height, differently from the prior art latching mechanisms which require a relevant longitudinal space in order to be installed. In Figure 2 an exemplary configuration of a switchgear 2 with three short doors 6 is showed, where six locking-devices 1 are visible. Each door 6 is also better shown in Figures 10 to 12.

Further advantageous features are now described in connection with the admittance opening 12 and the clinging protrusion 13.

The admittance-opening 12 is delimited by longitudinal edges 28 and by a pair of spaced traverse-edges 29. The stem 26 has a tapered-shape and has a cross-section which decreases from the base-plate 25 to the traverse-portion 27. On The stem 26 there are obtained an upper tilted surface 36 and a lower tilted surface 37 which merge with the surface of the traverse portion 27.

The tapered-shaped stem 26 is adapted for adjusting, upon a sliding-contact with any of said traverse edges 29 of the admittance opening 12, the height-position of the door 6 relative to the frame 4 in the closed position.

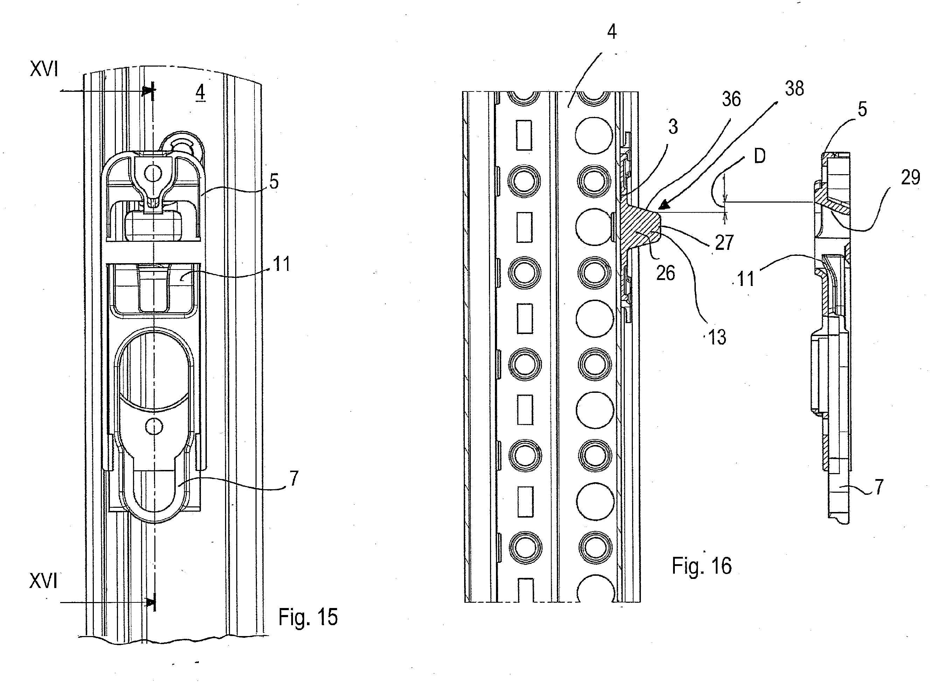

In particular, it may occurs that the door 6, due to the action of its own weight, tends to lean downward. In this case, during closing, the interaction of the upper traverse edge 29 with the upper surface of the traverse portion 27 and with the upper tilted surface 36 of the stem 26, makes the door 6 to rise to the required height position in order to be correctly closed. In Figure 16, the distance indicated by "D" refers to the maximum lowering value of the upper traverse edge 29, therefore of the housing unit 5, with respect to an upper edge 38 of the traverse portion 27, therefore with respect to the hook-plate element 3.

A more detailed description of the driving unit 8 for the locking-slide-element 7 follows.

The driving-unit comprises a pivotal toothed annular element 8, rotatable around a rotation axis 39 which is orthogonal to the plane along the which the locking-slide element 7 moves form the locking position 9 to the unlocking position 10.

Therefore, once the locking-device 1 is mounted on the switchgear 2, the rotation axis 39 results orthogonally arranged to the plane of the door 6.

The pivotal toothed annular element 8 has a coupling-surface 14 adapted to be connected to a desired cylinder-lock 15 operable upon insertion of a key.

As above mentioned, owing to the coupling-surface 14 of the pivotal toothed annular element 8 and to the encircling-wall 19 of the fixing-cover unit 16, a desired cylinder-lock 15 may be chosen according to specific needs.

The coupling-surface 14 enables the toothed annular element 8 to be pivotally driven in an integral manner with the cylinder-lock 15.

The pivotal toothed annular element 8 is pivotally housed in a circular through opening 32 of the housing-unit 5.

The locking-slide element 7 comprises a longitudinal slot-opening 33 which is laterally delimited at a side by an oblong- portion 34, and at the other side by the toothed-rack-portion 22.

The longitudinal slot-opening 33 is adapted to surround the pivotal toothed annular element 8 as shown in the attached figures.

The oblong-portion 34 in particular comprises an internal smooth surface 35 facing the toothed annular element 8.

The pivotal toothed annular element 8 has a toothing-part 21 meshing with a toothed-rack-portion 22 of the locking-slide-element 7 for displacing the latching-end 11 from the locking-position 9 to the unlocking-position 10 and vice versa.

The toothing-part 21 extends along only an angular fraction of a peripheral circular edge 23 of the toothed annular element 8.

A remaining part 24 of the peripheral circular edge 23, facing the internal smooth surface 35 of the locking-slide element 7, is smooth and toothless. This particular configuration of the locking-slide-element 7 and of the pivotal toothed annular element 8 entails some advantageous technical effects.

The presence of a toothing-part 21 along only an angular fraction of the toothed annular element 8 and the smooth configuration of the remaining part 24 and of the oblong-portion 34 makes possible to noticeably contain the width-dimensions of the locking device 1, in particular of the housing-unit 5. In fact, a toothed arrangement distributed along the entire peripheral circumference of the pivotal annular element 8 would impose to provide a gap between the latter and the oblong-portion 34 in order to avoid a mechanical-interference thereof with the teeth of the rotating annular element 8. In fact, the oblong-portion 34 - during movement in a first direction - would interfere with the proximate teeth rotating in the opposite direction, thus with the risk of wearing and damaging the teeth. Differently, owing to the configuration of the locking-device 1, the diameter of pivotal toothed annular is substantially the same or slightly less than the width dimension of the longitudinal slot-opening 33.

The smooth circular edge 24 of the annular element 8 may even be in contact with the smooth oblong portion 34. Owing to this structural configuration, a very contained width dimension of the housing-unit 5 is obtained, thus enabling the locking device to be mounted in a very narrow zone on the door 6. Such a technical feature, synergistically combined with the feature of the interpenetration of the clinging protrusion 13 within the housing-unit 5, makes the locking-device 1 to be mounted on a structurally simplified door 6, e.g. made of a single shaped layer of metal plate and provided with the peripheral gasket 30.

The very thin and narrow locking device 1 can therefore be mounted on the narrow zone 50 between the gasket 30 and the perimetrical edge 31 of the door 6, without compromising the effective sealing action of such a gasket 30.

It is evident from the above description and figures that the locking-device 1 according to the invention fully achieves the intended aims of providing a switchgear with a simple, cheap, easy to install, and versatile solution which enables also doors 6 made of a single layer of metal sheet or plate to comply with high IP ratings.

Owing to the simple and compact structural configuration, the locking-device 1 can be mounted in a very easy and quick way also on doors having very reduced height dimensions.

Evidently, the locking-device 1 also facilitates the assembly procedures which are simplified and accelerated with respect to the more time-consuming latching/looking mechanisms of the prior-art.

The locking-device 1 is susceptible of modifications or variations all within the scope of the inventive concept, and any details may be replaced with technically equivalent elements.

In particular, the shape, position and dimensions of any part of the locking-device 1 can be configured differently from what above described, according to specific needs or particular geometrical configurations of the doors and/or of the frame-uprights.

## Claims

1. Locking-device (1) for a switchgear (2), comprising:
- a hook-plate-element (3) suitable for being fixed to a frame (4) of said switchgear (2);
- a housing-unit (5) suitable for being mounted on a door (6) of said switchgear (2),
- a locking-slide-element (7) arranged within said housing-unit (5) and configured for engaging with said hook-plate-element (3) to lock said door (6) on said frame (4);
- a driving-unit (8) pivotally arranged within said housing-unit (5) and adapted for moving said locking-slide-element (7) from a locking position (9), in which said locking-slide-element (7) engages with said hook-plate-element (3) for locking said door (6), to an unlocking position (10), in which said locking-slide-element (7) disengages from said hook-plate-element (3) for allowing opening of said door (6),
**CHARACTERIZED IN THAT** said locking-slide-element (7) comprises a latching-end (11) linearly movable within said housing-unit (5) from said locking position (9) to said unlocking position (10), and **in that** an admittance-opening (12) is obtained on said housing-unit (5) for enabling a clinging-protrusion (13) of said hook-plate-element (3) to enter into said housing-unit (5) so as to engage with said latching-end (11) in said locking-position (9) inside said housing-unit (5).

2. Locking-device according to claim 1, wherein said driving-unit is defined by a pivotal toothed annular element (8) having a coupling-surface (14) adapted to be connected to a desired cylinder-lock (15) operable upon insertion of a key so that said toothed annular element (8) can be pivotally driven.

3. Locking-device according to claim 2, further comprising a fixing-cover-unit (16) intended to be applied to an external side (17) of said door (6) and provided with a receiving opening (18) delimited by an encircling-wall (19) for housing said cylinder-lock (15), said housing-unit (5) being adapted to be placed on an internal side (20) of said door (6) and to be connected to said fixing-cover-unit (16).

4. Locking-device according to claim 2 or 3, wherein said pivotal toothed annular element (8) has a toothing-part (21) meshing with a toothed-rack-portion (22) of said locking-slide-element (7) for displacing said latching-end (11) from said locking-position (9) to said unlocking-position (10) and vice versa.

5. Locking-device according to claim 4, wherein said toothing-part (21) extends along only an angular fraction of a peripheral circular edge (23) of said toothed annular element (8), a remaining part (24) of said peripheral circular edge (23) being smooth and toothless.

6. Locking-device according to one or more of the preceding claims, wherein said hook-plate-element (3) comprises a base-portion (25) suitable for being applied and fixed to an upright of said frame (4), and said clinging-protrusion (13) includes a stem (26) protruding from said base-portion (25) and a traverse-portion (27) projecting transversely from said stem (26) at an offset-distance from, and parallel to, said base-portion (25), said latching-end (11) being adapted for getting interposed, in said locking-position (9), between said traverse-portion (27) and said base-portion (25).

7. Locking-device according to claim 6, wherein said clinging-protrusion (13) has a T-shaped cross-section, with said traverse-portion (27) projecting orthogonally in two opposite directions from said stem (26) so as to define two jut-parts (27a, 27b), said latching-end (11) comprising two parallel and spaced prong-parts (11a, 11b) each configured for engaging with one of said jut-parts (27a, 27b).

8. Locking-device according to claim 7, wherein said prong- parts (11a, 11b) have ramp-ends for facilitating the insertion of said prong-parts (11a, 11b) into the space between said traverse-portion (27) and said base-plate (25), said ramp-ends acting, upon a sliding movement relative to said jut-parts (27a, 27b), for tightly shutting said door (6) against said frame (4).

9. Locking-device according to one or more of the preceding claims, wherein said admittance-opening (12) is delimited by longitudinal edges (28) and by a pair of spaced traverse-edges (29), said stem (26) being tapered-shape with a cross-section decreasing from said base-plate (25) to said traverse-portion (27), said tapered-shaped stem (26) being adapted for adjusting, upon a sliding-contact with any of said traverse edges (29), a height-position of said door (6) relative to said frame (4).

10. Locking-device according to one or more of the preceding claims, wherein said housing-unit (5) and said fixing-cover-unit (16) are adapted for being applied on opposite sides of a sheet material defining said door (6).

11. A cabinet for a switchgear (2), comprising:
- a frame (4) delimiting an internal room for housing electric/electronic components;
- a door (6) hinged on an upright of said frame (4);
**characterized in that** it comprises at least one locking-device (1) according to one or more of the preceding claims, wherein said hook-plate-element (3) is fixed to said frame (4) and said housing-unit (5) is mounted on said door (6).

12. A cabinet according to claim 11, wherein:
- a peripheral-gasket (30) is arranged on an internal side (20) of said door (6) and intended to be pressed against an abutment-zone of said frame (4) for a waterproof and fireproof protection of said internal room; and
- said housing-unit (5) of the locking-device is positioned between said peripheral-gasket (30) and a perimetrical edge (31) of said door (6).

13. A cabinet according to claim 11 or claim 12, wherein said door (6) is made of a single layer of material.

14. A switchgear (2) **characterized in that** it comprises a cabinet according to one or more of claims 11-13.
